# EUROPÄISCHE PATENTANMELDUNG

(11) **EP 4 696 660 A1**
(43) Veröffentlichungstag der Anmeldung: **18.02.2026**
(21) Anmeldenummer: 25159881.9
(22) Anmeldetag: 25.02.2025
(51) Int. Cl.: C02F 1/469

(54) **VORRICHTUNG ZUR ENTFERNUNG VON IONEN AUS WASSER**

(30) Priorität: 16.08.2024 DE 102024123446
(71) Anmelder: Grünbeck AG, 89420 Höchstädt a.d. Donau (DE)
(72) Erfinder: Keßler, Norbert, 86405 Meitingen (DE); Finger, Markus, 89420 Höchstädt (DE); Bosch, Benedikt, 86650 Wemding (DE)
(74) Vertreter: Charrier Rapp & Liebau

(57) **Zusammenfassung**

Die Erfindung betrifft eine Vorrichtung zur Entfernung von Ionen aus Wasser basierend auf dem Prinzip der kapazitiven Entionisierung, wobei die Vorrichtung ein Gehäuse (1) umfasst, das einen Wassereinlass (2) und einen Wasserauslass (3) aufweist, wobei sich innerhalb des Gehäuses (1) ein Stapel (4) aus mehreren aktiven Schichten (5) befindet, wobei jede aktive Schicht (5) mindestens eine erste Elektrode (6a), eine zweite Elektrode (6b) und eine zwischen der ersten und der zweiten Elektrode angeordnete wasserdurchlässige Abstandsschicht (7) umfasst. Die Elektroden (6a, 6b) sind jeweils über elektrisch leitende Kontaktstäbe (8a, 8b) mit einer elektrischen Quelle verbindbar, wobei zwischen aufeinanderfolgenden Elektroden (6a, 6b) im Bereich der Kontaktstäbe (8a, 8b) elektrisch leitende Distanzelemente (9) angeordnet sind, welche zwei aufeinanderfolgende Elektroden (6a, 6b) in Abstand zueinander halten. Um eine Vorrichtung bereitzustellen, die einfach zu montieren ist und eine zuverlässige Kontaktierung der Elektroden gewährleistet, sind die im Bereich der Kontaktstäbe (8a, 8b) angeordneten Distanzelemente (9) über Klemmscheiben (10a, 10b) elektrisch mit dem jeweiligen Kontaktstab (8a, 8b) kontaktiert, wobei die Klemmscheiben (10a, 10b) kraftschlüssig mit dem jeweiligen Kontaktstab (8a, 8b) verbunden sind und die Distanzelemente (9) nicht kraftschlüssig an den jeweiligen Kontaktstäben (8a, 8b) anliegen.

## Beschreibung

Die Erfindung betrifft eine Vorrichtung zur Entfernung von Ionen aus Wasser basierend auf dem Prinzip der kapazitiven Entionisierung, insbesondere der membrangestützten kapazitiven Entionisierung, nach dem Oberbegriff des Anspruchs 1.

Die kapazitive Entionisierung ist eine Technologie zur Abtrennung von Ionen aus Wasser durch Anlegen einer elektrischen Potentialdifferenz über zwei Elektroden, die insbesondere bei der Entsalzung von Wasser eingesetzt wird. Bei der Aufbereitung von Wasser durch kapazitive Entionisierung fließt Wasser zwischen zwei entgegengesetzt geladenen Elektroden, wobei die im Wasser enthaltenen Ionen entsprechend ihrer Ladung zur Anode oder zur Kathode wandern. Ein Verfahren zu kapazitiven Entionisierung durchläuft im Allgemeinen zwei Phasen: eine Adsorptionsphase, in der Rohwasser entsalzt wird, und eine Desorptionsphase, in der die Elektroden regeneriert werden. Während der Adsorptionsphase wird eine Potentialdifferenz über zwei Elektroden angelegt und Ionen werden aus dem Rohwasser adsorbiert und das entionisierte Wasser wird als Diluat einem Verbraucher zugeführt oder zwischengespeichert. Bei der kapazitiven Entionisierung mit porösen Kohlenstoffelektroden werden die Ionen dabei vorübergehend in den Poren der Kohlenstoffelektroden gespeichert. Nachdem die Elektroden mit Ionen gesättigt sind, werden die Elektroden regeneriert, indem die Potentialdifferenz der Elektroden umgekehrt wird. Durch die umgekehrte Polarisierung der Elektroden werden die adsorbierten Ionen durch elektrostatische Wechselwirkung von der jeweiligen Elektrode abgestoßen und an zwischen den Elektroden fließendes Wasser abgegeben. Das in der Desorptionsphase durch Aufsalzung des durchfließenden Wassers erzeugte Konzentrat kann als Abwasserstrom entsorgt werden.

Typischerweise liegen die Elektroden in Form von flachen Schichten, oft aus Aktivkohle, vor. Das Wasser fließt im Bereich zwischen den Elektroden durch eine wasserdurchlässige Abstandsschicht. Eine "Zelle" oder eine "aktive Schicht" ist eine funktionelle Einheit aus mindestens zwei Elektrodenschichten, der Anode und der Kathode, und einer dazwischenliegenden wasserdurchlässigen Abstandsschicht. Herkömmliche Vorrichtungen für die kapazitive Entionisierung von Wasser weisen üblicherweise einen Aufbau auf, in dem mehreren Zellen parallelgeschaltet und in einem Stapel angeordnet sind.

Bei der membrangestützten kapazitiven Entionisierung werden wasserundurchlässige ionenselektive Membranen als Ladungsbarrieren zwischen den Elektroden und der Abstandsschicht eingesetzt, wobei die ionenselektiven Membranen entweder nur Anionen oder nur Kationen passieren lassen. Die ionenselektiven Membranen sollen eine Verunreinigung des Porenvolumens der Elektroden mit dem Ausgangswasser und die Wiederaufnahme von Ionen während der Regeneration verhindern.

Aus der US 8,968,546 B2 ist eine Wasseraufbereitungsvorrichtung mit kapazitiven Entionisierungszellen bekannt, die einen Stapel scheiben- bzw. kreisförmiger Elektrodenschichten mit einem zentralen Durchgangsloch beinhaltet, wobei die Elektrodenschichten so mit Elektrizität versorgt werden, dass sie abwechselnd Anoden und Kathoden bilden. Die Anoden und Kathoden sind so angeordnet, dass sie in einem engen Abstand parallel zueinander liegen, sodass sie eine kapazitive Entionisierungszelle bilden. Das zu behandelnde Wasser wird von der Außenseite des Stapels radial nach innen zwischen den Elektrodenschichten hindurch in das zentrale Durchgangsloch und dann axial aus dem Stapel herausgeleitet. Die scheibenförmigen Elektrodenschichten der bekannten Wasseraufbereitungsvorrichtung werden über mindestens einen Verbindungsstab mit Elektrizität versorgt. Der elektrische Kontakt zwischen dem Verbindungsstab und den Elektrodenschichten wird dabei durch Stromverbinder hergestellt, die eine Klemmkraft auf den Verbindungsstab sowie auf randseitig vorstehende Zungen der Elektrodenschichten ausüben. Die Stromverbinder sind als Blöcke aus einem elektrisch leitenden und kompressiblen Material, insbesondere aus Graphit, mit einer zentralen Bohrung ausgebildet. Die in radialer Richtung wirkende Klemmkraft entsteht als Reaktion auf eine Axialkraft, die durch ein Zusammenpressen des Elektrodenstapels nach dem Zusammenbauen verursacht wird. Dabei wird die Klemmkraft auf die Zungen der Elektrodenschichten direkt erzeugt und die Klemmkraft auf den Verbindungsstab indirekt durch eine Verformung, bzw. durch eine Kompression der Stromverbinder, welche aus der ausgeübten Axialkraft in Verbindung mit der kompressiblen Materialeigenschaft der blockförmigen Stromverbinder resultiert.

In der bekannten Vorrichtung entstehen die Klemmkraft und der elektrische Kontakt zwischen den Stromverbindern und den Verbindungsstäben durch die Kompression und eine daraus resultierende Verformung der Stromverbinder als Reaktion auf eine externe Krafteinwirkung. Um diese Funktion erfüllen zu können muss das Material aus dem die Stromverbinder gefertigt sind, sowohl elektrisch leitend als auch in bestimmtem Umfang kompressibel sein, was die Materialauswahl erheblich einschränkt. In der bekannten Vorrichtung wird Graphit für die Herstellung der blockförmigen Stromverbinder eingesetzt, da es diesen Anforderungen an die Leitfähigkeit und die Kompressibilität genügt. Zudem dürfen die Stromverbinder, um ihre Funktion zu erfüllen, nur geringe Fertigungstoleranzen aufweisen und müssen zudem zwischen allen Elektrodenschichten angeordnet sein, um eine ausreichende Klemmwirkung für jede Elektrode zu erzeugen. Dies macht die Fertigung aufwendiger und verursacht hohe Herstellungskosten.

Bei der aus dem Stand der Technik bekannten Vorrichtung wird der Stapel nach dem Aufbau zusammengepresst, wobei sich der Druck auf die Schichten erhöht. Dabei wird das Material der Elektrodenschichten stark beansprucht und bei nicht exakt bündiger Ausrichtung der Bohrungen in den Elektrodenschichten und in den blockförmigen Stromverbindern können die Schichten beschädigt werden.

Die EP 4 095 103 A1 offenbart ein kapazitives Elektrodenmodul aus einem Stapel von mehreren Entionisationselektroden, in dem die Verbindungsstäbe, über welche die Elektrodenschichten mit einer Strom- oder Spannungsquelle verbunden werden, mit einem Gewinde zum Aufschrauben von Schraubenmuttern versehen sind. Mehrere Elektrodenschichten werden in ihrem Randbereich zusammengefasst und mittels der Schraubenmuttern zusammengepresst. Der elektrische Kontakt zwischen den Elektrodenschichten und dem Verbindungsstab wird über die Schraubenmuttern und über benachbarte Elektroden hergestellt.

In dieser bekannten Vorrichtung ist die elektrische Kontaktierung der Elektrodenschichten von dem Kontakt zwischen der Schraubenmutter und dem Gewinde des Verbindungsstabs und von der Verpressung der Elektrodenschichten im Randbereich über die Schraubenmuttern abhängig. Lösen sich bei dauerhaftem Betrieb der Vorrichtung die Schraubenmuttern, oder weisen diese zu große Fertigungstoleranzen auf, wir der elektrische Kontakt beeinträchtigt und die Entsalzungsleistung der Vorrichtung lässt nach. Ein weiterer Nachteil dieser bekannten Vorrichtung ist, dass die Elektrodenschichten im Randbereich beim Zusammensetzen der Deionisationselektrode verbogen werden müssen, damit sie über die Schraubenmuttern und benachbarte Elektrodenschichten kontaktiert werden können, ohne sich im Reaktionsbereich der Zelle zu berühren und die kapazitive Funktionsweise der Zelle zu beeinflussen. Dies kann das fragile Material der Elektrodenschichten stark beanspruchen und potenziell beschädigen.

Zudem wird der Bereich zwischen den Elektrodenschichten nicht gleichmäßig zusammengepresst, was zu einer ungleichmäßigen Druckverteilung in den Schichten führt. Ein weiterer Nachteil ist die Aufwendige Montage der Schraublösung.

Vor diesem Hintergrund besteht die Aufgabe der Erfindung in der Bereitstellung einer Vorrichtung zur Entfernung von Ionen aus Wasser basierend auf dem Prinzip der kapazitiven Entionisierung, die einfach zu montieren ist und eine gleichmäßige Druckverteilung im Stapel und damit eine optimierte Durchströmung gewährleistet. Zusätzlich besteht die Aufgabe der Erfindung in einer optimierten Entsalzungsleistung durch verbesserte Kontaktierung der Elektroden, bei reduzierten Herstellungs- und Materialkosten.

Diese Aufgaben werden durch eine Vorrichtung mit den Merkmalen des Anspruchs 1 gelöst. Bevorzugte Ausführungsformen der Vorrichtung gehen aus den abhängigen Ansprüchen hervor.

Die erfindungsgemäße Vorrichtung zur Entfernung von Ionen aus Wasser basiert auf dem Prinzip der kapazitiven Entionisierung, insbesondere der membrangestützten kapazitiven Entionisierung. Die erfindungsgemäße Vorrichtung umfasst ein Gehäuse, das einen Wassereinlass, durch den zu entionisierendes Wasser (Rohwasser) in die Vorrichtung einströmen kann und einen Wasserauslass, durch den entionisiertes Wasser (als Diluat) aus der Vorrichtung ausströmen kann, aufweist. Innerhalb des Gehäuses befindet sich ein Stapel aus mehreren aktiven Schichten, wobei jede aktive Schicht mindestens eine erste Elektrode, eine zweite Elektrode und eine zwischen der ersten und der zweiten Elektrode angeordnete wasserdurchlässige Abstandsschicht umfasst. Dabei sind die ersten Elektroden über einen ersten Kontaktstab und die zweiten Elektroden über einen zweiten Kontaktstab mit einer elektrischen Quelle verbindbar. Zwischen aufeinanderfolgenden ersten Elektroden im Bereich des ersten Kontaktstabs und zwischen aufeinanderfolgenden zweiten Elektroden im Bereich des zweiten Kontaktstabs sind jeweils elektrisch leitende Distanzelemente angeordnet, welche jeweils zwei aufeinanderfolgende Elektroden in Abstand zueinander halten. Die Distanzelemente sind über an den Kontaktstäben angeordnete Klemmscheiben elektrisch mit dem jeweiligen Kontaktstab kontaktiert, wobei die Klemmscheiben jeweils kraftschlüssig mit dem ihnen zugeordneten Kontaktstab verbunden sind. Kraftschlüssig bedeutet in diesem Zusammenhang, dass die Klemmscheiben eine radiale Klemmwirkung auf die Kontaktstäbe ausüben, aufgrund derer eine Relativbewegung zwischen den Klemmscheiben und den Kontaktstäben durch Haftreibung verhindert wird. Dabei erfolgt der elektrische Kontakt zwischen dem ersten Kontaktstab und den ersten Elektroden über erste Klemmscheiben, wobei die ersten Klemmscheiben kraftschlüssig mit dem ersten Kontaktstab verbunden sind und eine radiale Klemmwirkung auf den ersten Kontaktstab ausüben. Entsprechend erfolgt der elektrische Kontakt zwischen dem zweiten Kontaktstab und den zweiten Elektroden über zweite Klemmscheiben, wobei die zweiten Klemmscheiben kraftschlüssig mit dem zweiten Kontaktstab verbunden sind und eine radiale Klemmwirkung auf den zweiten Kontaktstab ausüben.

Vorzugsweise sind dabei zwischen den ersten Klemmscheiben und den ersten Elektroden, sowie zwischen den zweiten Klemmscheiben und den zweiten Elektroden Distanzelemente angeordnet. Insbesondere ist zwischen in Axialrichtung des ersten Kontaktstabs aufeinanderfolgenden ersten Elektroden jeweils ein Distanzelement angeordnet und zwischen in Axialrichtung des ersten Kontaktstabs aufeinanderfolgenden ersten Klemmscheiben ist mindestens ein Distanzelement und ein zungenförmiger Abschnitt einer ersten Elektrode angeordnet. Entsprechend ist die Anordnung am zweiten Kontaktstab zur elektrischen Kontaktierung der zweiten Elektroden über die zweiten Klemmscheiben mit dazwischenliegenden Distanzelementen ausgebildet. Vorzugsweise sind zwischen in Axialrichtung des ersten Kontaktstabs aufeinanderfolgende erste Klemmscheiben mehrere Distanzscheiben und mindestens ein zwischen benachbarten Distanzscheiben liegender, zungenförmiger Abschnitt einer ersten Elektrode angeordnet. Entsprechendes trifft auf die zweiten Elektroden und die zweiten Klemmscheiben an dem zweiten Kontaktstab zu.

Dabei können die Distanzelemente an den Kontaktstäben (formschlüssig) anliegen, jedoch sind die Distanzelemente nicht kraftschlüssig mit den Kontaktstäben verbunden. Die Distanzelemente können zwar durch einen Formschluss vollumfänglich an den Kontaktstäben anliegen, jedoch üben sie keine radiale Klemmwirkung auf den jeweiligen Kontaktstab aus. Die elektrische Kontaktierung der Distanzelemente mit dem ihnen zugeordneten Kontaktstab (erster bzw. zweiter Kontaktstab) erfolgt primär über die Klemmscheiben, welche über eine kraftschlüssige Verbindung elektrisch mit dem jeweiligen Kontaktstab kontaktiert sind und flächig, insbesondere an ihren jeweiligen Stirnflächen, mit den Distanzelementen elektrisch leitend in Verbindung stehen.

Die Distanzelemente wirken zum einen als Abstandshalter zwischen den Elektroden und zum anderen ermöglichen sie einen zuverlässigen elektrischen Kontakt zu den Elektroden. Ein unmittelbarer elektrischer Kontakt zwischen den Distanzelementen und dem ihnen zugeordneten Kontaktstab ist nicht zwingend erforderlich und besteht aufgrund der ggf. losen Anlage der Distanzelemente am Kontaktstab nicht unbedingt, da die Distanzelemente zumindest nicht kraftschlüssig und bevorzugt auch nicht formschlüssig mit den Kontaktstäben verbunden sind und insbesondere keine Klemmwirkung auf die Kontaktstäbe ausüben. Die Klemmscheiben fungieren als Verbindungselement zur (mittelbaren) elektrischen Verbindung der Distanzelemente mit den Kontaktstäben.

Durch die kraftschlüssige Verbindung der Klemmscheiben und des zugeordneten Kontaktstabes entsteht ein zuverlässiger elektrischer Kontakt zu dem jeweiligen Kontaktstab. Zudem wirkt die radiale Klemmwirkung der Klemmscheiben einem Verrutschen in axialer Richtung bezogen auf die Kontaktstäbe entgegen. Die Distanzelemente und die Elektroden werden durch die Klemmscheiben in ihrer axialen Position fixiert. Dadurch entsteht schon beim Aufbau des Stapels eine axiale Komprimierung der aktiven Schichten, was einen kompakten und stabilen Aufbau des Stapels ermöglicht.

Vorzugsweise werden die Klemmscheiben beim Stapeln der Schichten auf die Kontaktstäbe aufgepresst. Beim Aufpressen der Klemmscheiben werden bereits vorhandene, vorzugsweise mehrere, abwechselnd angeordnete Distanzelemente und Elektroden durch die Klemmwirkung der Klemmscheiben im Bereich der Elektrode zusammengepresst. Dadurch kann bereits beim Aufbau des Stapels eine gleichmäßige Druckverteilung erzeugt werden.

Durch die Klemmwirkung der Klemmscheiben entsteht eine leicht zu montierende Vorrichtung zur Entfernung von Ionen mit optimaler Kontaktierung der Elektroden sowie mit einer im Vergleich zum Stand der Technik verbesserten Druckverteilung und in der Folge einer optimierten Durchströmung, die sich positiv auf die Entsalzungsleistung auswirkt. Zudem erleichtert die erfindungsgemäße Vorrichtung die automatisierte Fertigung des Stapels. Die Klemmscheiben eröffnen die Möglichkeit, eine Verpressung bereits beim Aufbau der Vorrichtung und insbesondere beim Stapeln der aktiven Schichten zu erzeugen. Dies ist schonender für die dünnen Elektroden als ein Komplett-Aufbau des Stapels durch loses Aufeinanderlegen der aktiven Schichten mit einer abschließenden axialen Verpressung des gesamten Stapels, bei der die fragilen Schichten beschädigt werden können.

In einer vorteilhaften Ausführungsform können zusätzlich in jeder aktiven Schicht zwischen den Elektroden und der Abstandsschicht wasserundurchlässige ionenselektive Membranen als Ladungsbarrieren vorhanden sein. Dabei ist vorzugsmäßig zwischen der Elektrode, die während der Absorptionsphase als Kathode dient, und der Abstandsschicht eine ionenselektive Membran angeordnet, die nur Kationen passieren lässt und umgekehrt, zwischen der Elektrode, die während der Absorptionsphase als Anode dient und der Abstandsschicht eine ionenselektive Membran angeordnet, die nur Anionen passieren lässt. Vorzugsweise kann zusätzlich dazu zwischen den Elektroden und den ionenselektiven Membranen eine Aktivkohleschicht angeordnet sein, die als Speicherort der absorbierten Ionen dient. Die ionenselektiven Membranen verhindern eine Verunreinigung des Porenvolumens der Elektroden mit dem Ausgangswasser und die Wiederaufnahme entgegengesetzt geladener Ionen während der Regeneration.

In einer vorteilhaften Ausführungsform der Erfindung weist das Gehäuse eine obere Platte und eine untere Platte und zweckmäßig einen zylindrischen Aufbau mit einer zylindrischen Außenwand auf. Das Gehäuse dient dazu, den wasserdurchspülten Teil der Vorrichtung nach außen hin abzugrenzen und insbesondere abzudichten. Eine obere und untere Platte ermöglichen eine einfache Montage der Vorrichtung unter axialer Verpressung der aktiven Schichten und eignen sich für die Positionierung des Wassereinlasses, des Wasserauslasses und von elektrischen Anschlüssen.

In einer weiteren Ausführungsform sind die obere Platte und die untere Platte über mehrere an Rändern der Platten angeordnete Verbindungselemente miteinander verbunden und insbesondere gegeneinander verpresst. Beispielsweise können die Ränder der oberen und der unteren Platte einen Ring aus kreisförmigen Aussparungen aufweisen, die fluchtend zueinander ausgerichtet sind, wobei die Aussparungen der Aufnahme von stabförmigen Verbindungselementen, beispielsweise Schrauben oder Gewindestangen, dienen. Mit den Verbindungselementen könne die obere und untere Platte des Gehäuses miteinander verbunden, insbesondere verschraubt und insbesondere gegeneinander verpresst werden. Über die Verbindungselemente kann vorzugsweise der Plattenabstand so eingestellt werden, dass ein bestimmter Druck auf das Innere des Gehäuses, insbesondere den Stapel aus aktiven Schichten, erzeugt werden kann. Dies ist vorteilhaft, um eine axiale Kompression des Stapels aus aktiven Schichten zu erzeugen und um zu gewährleisten, dass in dem Stapel aus aktiven Schichten keine freien Bereiche (das heißt Bereiche, welche nicht durch zumindest das Material der wasserdurchlässigen Abstandsschicht gefüllt sind) vorhanden sind. Solche freien Bereiche könnte das Wasser mit einer größeren Fließgeschwindigkeit durchströmen, sodass die Entsalzungsleistung beeinträchtigt würde.

Eine weitere erfindungsgemäße Ausführungsform zeichnet sich dadurch aus, dass die Kontaktstäbe Anschlüsse enthalten, über die die Kontaktstäbe mit einer elektrischen Quelle außerhalb des Gehäuses elektrisch verbindbar sind, wobei sich die Anschlüsse insbesondere an oder auf der oberen Platte befinden. Zusätzlich oder alternativ dazu können sich zweckmäßig der Wassereinlass und/oder der Wasserauslass an der oberen Platte befinden. Eine Anordnung aller Anschlüsse, des Wassereinlasses und des Wasserauslasses an oder auf der oberen Platte erleichtert die Handhabung bei der Inbetriebnahme der Vorrichtung und ermöglicht, dass die untere Platte für die Montage oder Fixierung der Vorrichtung genutzt werden kann, und/oder als Auflagefläche im Falle einer freistehenden Vorrichtung dient.

In einer vorteilhaften Ausführungsform durchströmt das Wasser im Betrieb der Vorrichtung die wasserdurchlässigen Abstandsschichten radial von außen nach innen. Eine Durchströmung der wasserdurchlässigen Abstandsschichten radial von außen nach innen führt dazu, dass das Wasser den Bereich zwischen den Elektroden zunächst langsamer und dann schneller durchströmt. Beim Durchströmen der Abstandsschicht nimmt im Betrieb der Vorrichtung die Ionenkonzentration des Wassers dadurch ab, dass die Ionen in der jeweiligen Elektrode eingelagert werden. Durch die radiale Durchströmung der Abstandsschicht von außen nach innen und durch die damit verbundenen unterschiedlichen Fließgeschwindigkeiten bleibt die Beladungsrate der Elektroden in Abhängigkeit des Radius jedoch annähernd gleich und die Menge der eingelagerten Ionen bezogen auf die Elektrodenfläche ist ausgeglichen.

In einem bevorzugten Ausführungsbeispiel sind die ersten und zweiten Elektroden als scheibenförmige Elektroden ausgebildet und sind bevorzugt im Wesentlichen kreisrund ausgestaltet. In der obigen Ausführungsform, bei der das Wasser im Betrieb der Vorrichtung die wasserdurchlässigen Abstandsschichten radial von außen nach innen durchströmt, ist es weiterhin vorteilhaft, wenn die Elektroden jeweils eine zentrale Aussparung aufweisen, wobei die zentralen Aussparungen bei gestapelten aktiven Schichten im Stapel fluchtend übereinander angeordnet sind. Durch diese Anordnung bildet sich ein zentraler Kanal, durch den entionisiertes Wasser zum Wasserauslass strömen kann.

In einer zweckmäßigen Weiterbildung der Vorrichtung ist es vorteilhaft, wenn zwischen äußeren Rändern der Elektroden und dem Gehäuse ein Spalt angeordnet ist, durch den zu entionisierendes Wasser vom Wassereinlass in die wasserdurchlässige Abstandsschicht strömen kann. Bei dieser vorteilhaften Weiterbildung füllt sich im Betrieb der Vorrichtung zuerst der äußere Spalt mit Wasser und wenn der Spalt vollständig gefüllt ist dringt das Wasser gleichmäßig von außen in die wasserdurchlässige Abstandsschicht ein. Dies fördert eine gleichmäßige Durchströmung aller aktiven Schichten des Stapels und verbessert die Entsalzungsleistung. Der Spalt zwischen den äußeren Rändern der Elektroden und dem Gehäuse kann durch wasserdurchlässiges Material gefüllt sein, insbesondere mit dem gleichen Material wie das der wasserdurchlässigen Abstandsschicht. Dies ist vorteilhaft um eine gleichmäßige Durchströmung und Druckverteilung zu gewährleisten. In Ausführungsformen, in denen die Durchströmung im Gegensatz dazu von innen nach außen verläuft, wird die Ionenfracht bei der Desorption schnell in den Spalt entlassen und damit die Konzentration deutlich gesenkt.

Im Falle einer radialen Durchströmung des Stapels von außen nach innen und einem Gehäuse mit einer oberen und einer unteren Platte ist es zudem vorteilhaft, wenn der Wasserauslass nahe des Zentrums der oberen Platte angeordnet ist und der Wassereinlass im Verhältnis dazu näher am Plattenrand angeordnet ist. Dadurch füllt das Wasser, welches durch den Wassereinlass in das Gehäuse einströmt unmittelbar den Spalt zwischen den äußeren Rändern der Elektroden und dem Gehäuse und dringt danach gleichmäßig von außen in die wasserdurchlässigen Abstandsschichten ein. Nach dem durchströmen der Abstandsschichten von außen nach innen strömt das Wasser über den zentralen Kanal zum Wasserauslass und tritt dort aus dem Gehäuse aus.

In einer weiteren vorteilhaften Ausführungsform kann im zentralen Kanal, der durch eine fluchtend übereinander angeordnete Ausrichtung der Aussparungen der Elektroden entsteht, eine Zentralstange angeordnet sein, welche die obere Platte und die untere Platte des Gehäuses miteinander verbindet und insbesondere gegeneinander verpresst. Dies ist vorteilhaft, um eine noch gleichmäßigere Druckverteilung im Stapel zu erzeugen und um eine gleichmäßige Durchströmung zu ermöglichen. Dies dient ferner der Vermeidung von freien Bereichen oder Bereichen mit einem niedrigeren Strömungswiderstand, wodurch verhindert wird, dass das Wasser die aktiven Schichten zu schnell durchströmt und dadurch nicht die volle Entsalzungsleistung ausgeschöpft werden kann.

In der erfindungsgemäßen Vorrichtung sind zwischen aufeinanderfolgenden ersten Elektroden im Bereich des ersten Kontaktstabs und zwischen aufeinanderfolgenden zweiten Elektroden im Bereich des zweiten Kontaktstabs jeweils elektrisch leitende Distanzelemente angeordnet. Dabei ist zwischen zwei in Axialrichtung des jeweiligen Kontaktstabs aufeinanderfolgenden Distanzelementen jeweils ein zungenförmiger Abschnitt einer Elektrode angeordnet. Die zungenförmigen Abschnitte der Elektroden können dabei durch im Bereich des jeweils zugeordneten Kontaktstabs randseitig an der jeweiligen Elektrode vorstehende Zungen gebildet sein.

In einem weiteren Ausführungsbeispiel weisen die ersten Elektroden daher bevorzugt erste Zungen mit Aussparungen auf, durch die der erste Kontaktstab hindurchragt, und die zweiten Elektroden weisen zweite Zungen mit Aussparungen auf, durch die der zweite Kontaktstab hindurchragt. Eine solche Ausgestaltung der Elektroden ist vorteilhaft, damit eine Auflagefläche zwischen den an den Kontaktstäben angeordneten Distanzelementen und den Elektroden entsteht, die ausreichend groß ist, so dass die Zungen der Elektroden zwischen den Distanzelementen eingeklemmt werden können. Dies ermöglicht zudem einen sicheren elektrischen Kontakt zwischen den Elektroden und den Distanzelementen.

Gemäß einer weiteren Ausführungsform werden mehrere aufeinanderfolgende erste Elektroden und/oder mehrere aufeinanderfolgende zweite Elektroden und die jeweils dazwischenliegenden Distanzelemente durch eine obere Klemmscheibe und eine untere Klemmscheibe zusammengepresst. In dieser bevorzugten Ausführungsform kontaktieren die obere und die untere Klemmscheibe den Kontaktstab und der elektrische Kontakt der Elektroden zur Klemmscheibe wird über mindestens ein Distanzelement oder mehrere Distanzelemente und eine oder mehrere weitere Elektroden hergestellt. In einem solchen Aufbau werden insgesamt weniger Klemmscheiben benötigt, da eine Klemmscheibe den elektrischen Kontakt für mehrere Elektroden herstellt. Da die Klemmscheiben aufgrund der erforderlichen Klemmwirkung aufwendiger und teurer in der Herstellung sind als die Distanzelemente ist eine solche Anordnung vorteilhaft für eine kostengünstige Herstellung der Vorrichtung. Zudem verringert sich insgesamt der Aufwand bei der Montage dadurch, dass die Distanzelemente nicht kraftschlüssig und bevorzugt auch nicht formschlüssig am Kontaktstab anliegen und nicht aufgepresst werden müssen.

In einem weiteren Ausführungsbeispiel üben die Klemmscheiben jeweils eine in axialer Richtung des Kontaktstabs wirkende Pressung auf die Distanzelemente und die Elektroden aus. Durch die Reibung der Klemmscheiben am Kontaktstab werden die Klemmscheiben in ihrer axialen Position an den Kontaktstäben fixiert. Dies kann dazu genutzt werden, um zwischen zwei Klemmscheiben eine Pressung auf die Distanzelemente und die eine oder mehrere Elektroden in axialer Richtung, bezogen auf die Kontaktstäbe, zu erzeugen. Auf diese Weise kann bereits bei der Montage beim Stapeln der Schichten abschnittsweise eine gleichmäßige mechanische Vorspannung erzeugt werden. Wird nach dem Stapeln der Schichten der gesamte Stapel im Gehäuse weiter zusammengepresst, indem die obere Platte aufgesetzt und in Bezug auf die untere Platte mittels der Verbindungselemente verspannt wird, sinkt durch die vorherige Kompression und die dadurch erzeugte mechanische Vorspannung durch die Klemmscheiben das Risiko einer Beschädigung der fragilen Elektroden.

Eine weitere Ausführungsform zeichnet sich dadurch aus, dass die Klemmscheiben jeweils eine Kontaktfläche aufweisen, über die die Klemmscheiben jeweils mit einem benachbarten Distanzelement elektrisch leitend in Kontakt stehen. Die Kontaktfläche ist insbesondere eben und durch die Stirnflächen der Klemmscheiben ausgebildet und gewährleistet dabei, dass ein zuverlässiger elektrischer Kontakt zwischen den Klemmscheiben und den Distanzelementen besteht. Zudem kann über die Kontaktfläche eine Kraft in axialer Richtung (bezogen auf die Kontaktstäbe), die beim Verspannen der oberen Platte mit der unteren Platte entsteht, auf die Distanzelemente übertragen werden.

In einem weiteren Ausführungsbeispiel ist es vorteilhaft, wenn die Distanzelemente eine Grundfläche aufweisen, die größer ist als die Kontaktfläche der Klemmscheiben. Die Distanzelemente kontaktieren auf der einen Seite eine Elektrode und auf der anderen Seite entweder eine weitere Elektrode oder eine Klemmscheibe. Die Distanzelemente sollten zweckmäßig so ausgestaltet sein, dass auf beiden Seiten ein zuverlässiger elektrischer Kontakt entsteht. Dies wird insbesondere durch eine Form erzeugt, die zu beiden Seiten flach an den Elektroden bzw. den Klemmscheiben anliegt. Eine im Verhältnis zur Kontaktfläche der Klemmscheiben größere Grundfläche der Distanzelemente dient neben einem guten elektrischen Kontakt auch als Fixierung der Elektroden. Die von den Klemmscheiben ausgeübte Klemmkraft wird dabei über die Distanzelemente auf die Elektroden übertragen. Die Elektroden übertragen die Klemmkraft wiederum auf die zwischen den Elektroden befindliche wasserdurchlässige Abstandsschicht und erzeugen eine gleichmäßige flächige Pressung in axialer Richtung.

In einer weiteren bevorzugten Ausführungsform sind die Klemmscheiben federnd ausgebildet und weisen insbesondere eine C- oder Omega-förmige (Ω-förmige) Grundstruktur und/oder eine Öffnung mit einem Innendurchmesser auf, wobei der Innendurchmesser der Öffnung bevorzugt kleiner ist als der Außendurchmesser der Kontaktstäbe im Bereich des Stapels. Eine solche Ausgestaltung der Klemmscheiben, insbesondere mit einem geringfügig kleineren Innendurchmesser der Öffnung im Vergleich zum Außendurchmesser der Kontaktstäbe, fördert eine feste Klemmung zwischen den Klemmscheiben und den Kontaktstäben und bietet eine optimale radiale Klemmwirkung auf den jeweiligen Kontaktstab, die durch die Haftreibung am Kontaktstab erzeugt wird. Eine federnd ausgebildete Klemmscheibe bietet zudem den Vorteil einer im Vergleich zu einer Schraublösung einfacheren und schnelleren Montage. Die federnden Klemmscheiben können für die Montage auf den Kontaktstab aufgepresst werden und entfalten bereits bei der Montage ihre Klemmwirkung. Dadurch kann bereits bei der Montage beim Stapeln der Schichten eine gleichmäßige mechanische Vorspannung auf die Schichten erzeugt werden, welche das Risiko einer Beschädigung der fragilen Elektroden beim abschließenden Zusammenpressen des gesamten Stapels verringert. Ein weiterer Vorteil ist, dass federnd ausgebildete Klemmscheiben vom Kontaktstab lösbar und Wiederverwendbar sind.

Gemäß einer weiteren bevorzugten Ausführungsform sind die Klemmscheiben aus einem elektrisch leitenden Material gefertigt, das zumindest im Wesentlichen inkompressibel ist und insbesondere ein Kompressionsmodul von größer als 50 GPa und insbesondere größer als 80 GPa aufweist. Ein im Wesentlichen inkompressibles Material der Klemmscheibe gewährleistet, dass die mechanische Verspannung der aktiven Schichten in axialer Richtung und/oder die Klemmwirkung nicht über die Dauer des Betriebes der Vorrichtung dadurch nachlässt, dass das Material unter einem von dem Gehäuse ausgeübten Druck komprimiert. In der bevorzugten Ausführungsform mit federnd ausgebildeten Klemmscheiben, wird bspw. die Klemmkraft und der elektrische Kontakt zwischen der Klemmscheibe und dem Kontaktstab aus der Geometrie und der federnden Ausgestaltung der Klemmscheiben erzeugt. Der kraftschlüssige Kontakt zwischen den Klemmscheiben und dem Kontaktstab entsteht dabei insbesondere nicht aufgrund einer Kompression des Klemmscheibenmaterials, durch die die Klemmscheibe an den Kontaktstab gedrückt wird, wie dies bei bekannten kapazitiven Entionisierungszellen der Fall ist.

In einer weiteren zweckmäßigen Ausführungsform bestehen der erste und der zweite Kontaktstab und/oder die Distanzelemente und/oder die Klemmscheiben aus einem elektrisch leitenden Material. Insbesondere können der erste und der zweite Kontaktstab und/oder die Distanzelemente und/oder die Klemmscheiben jeweils aus Titan bestehen oder Titan enthalten. Titan eignet sich deshalb besonders gut als Material für die Kontaktstäbe, Distanzelementen und Klemmscheiben, weil es einerseits eine gute Leitfähigkeit (von 2,56 MS/m) und eine geringe Kompressibilität (mit einem Kompressionsmodul von 110 GPa) aufweist und andererseits eine gute Beständigkeit gegenüber Wasser und insbesondere eine gute Korrosionsbeständigkeit aufweist. Ein Kontakt zwischen dem Wasser und Komponenten aus Titan muss daher nicht vermieden werden. Dies vereinfacht den Aufbau, da keine zusätzlichen Dichtelemente zum Schutz des Materials eingebaut werden müssen.

Diese und weitere Vorteile sowie bevorzugte Merkmale der erfindungsgemäßen Vorrichtung ergeben sich aus dem nachfolgend unter Bezugnahme auf die begleitenden Zeichnungen beschriebenen Ausführungsbeispiel, wobei die Zeichnungen zeigen:
- **Fig. 1:**: Schematischer Aufbau eines in einer erfindungsgemäßen Vorrichtung einsetzbaren Stapels aus mehreren aktiven Schichten mit ersten und zweiten Elektroden, zwischen denen jeweils eine wasserdurchlässige Abstandsschicht angeordnet ist;
- **Fig. 2:**: Darstellung einer erfindungsgemäßen Vorrichtung mit einem zylindrischen Gehäuse in einer Außenansicht;
- **Fig. 3:**: Darstellung eines Querschnitts der Vorrichtung von Figur 2, wobei die Schnittebene eine Radialebene ist, welche durch einen Wassereinlass sowie einen Wasserauslass, die in einer oberen Platte des Gehäuses angeordnet sind, verläuft und im Zentrum eine Zentralstange gezeigt ist, welche das Gehäuse in axialer Richtung komprimiert;
- **Fig. 4:**: Darstellung der Vorrichtung von Figur 2 in einer Innenansicht mit einer Detaildarstellung des Stapels und einer Anordnung von Kontaktstäben zur elektrischen Kontaktierung von Elektroden mit einer außerhalb des Gehäuses angeordneten elektrischen Quelle;
- **Fig. 5:**: Detailansicht eines Ausschnittes aus Figur 5, der eine Anordnung eines Kontaktstabes und mit diesem über Distanzelemente und Klemmscheiben elektrisch leitend verbundene Zungen der Elektroden zeigt.
- **Fig. 6:**: Darstellung eines Querschnitts der Vorrichtung von Figur 2, wobei die Schnittebene eine Radialebene ist, die durch einen Kontaktstab und daran angeordnete Distanzelemente und Klemmscheiben verläuft.

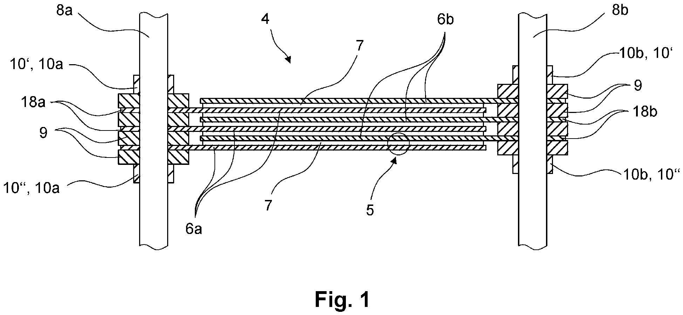

In Figur 1 ist schematisch ein in einer erfindungsgemäßen Vorrichtung zur Entfernung von Ionen aus Wasser basierend auf dem Prinzip der kapazitiven Entionisierung einsetzbarer Stapel 4 aus mehreren aktiven Schichten 5 gezeigt, wobei jede aktive Schicht 5 mindestens eine erste Elektrode 6a, eine zweite Elektrode 6b und eine zwischen der ersten Elektrode 6a und der zweiten Elektrode 6b angeordnete wasserdurchlässige Abstandsschicht 7 umfasst. Zusätzlich können in jeder aktiven Schicht 5 zwischen den Elektroden und der Abstandsschicht 7 wasserundurchlässige ionenselektive Membranen als Ladungsbarrieren vorhanden sein, die aus Gründen der Übersichtlichkeit nicht in Figur 1 dargestellt sind.

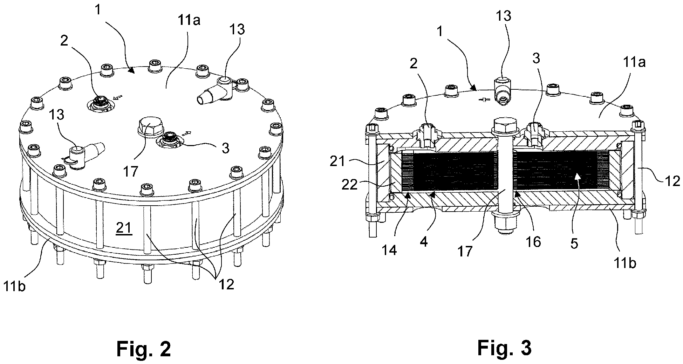

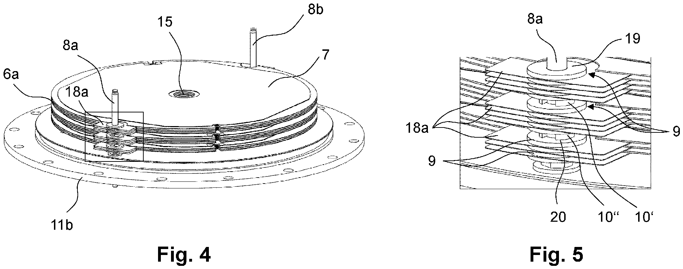

In einer Ausführungsform der erfindungsgemäßen Vorrichtung ist der Stapel 4 aktiver Schichten 5 in einem Gehäuse 1 angeordnet, wie in Figuren 2 und 3 gezeigt. Die Elektroden 6a, 6b sind über elektrisch leitende Kontaktstäbe 8a, 8b mit einer elektrischen Quelle, die sich außerhalb des Gehäuses 1 befindet, elektrisch leitend verbindbar. Die in dem Stapel 4 übereinander angeordneten ersten Elektroden 6a bilden bei entsprechender Kontaktierung und Polung der elektrischen Quelle eine Anode und die übereinander angeordneten zweiten Elektroden 6a bilden eine Kathode. Den ersten Elektroden 6a ist dabei ein erster Kontaktstab 8a zugeordnet, über den die ersten Elektroden 6a elektrisch mit der Quelle verbunden werden können. Entsprechend ist den zweiten Elektroden 6b ein zweiter Kontaktstab 8b zugeordnet, über den die zweiten Elektroden 6b elektrisch mit der Quelle verbunden werden können. Die elektrische Kontaktierung zwischen den Elektroden (erste Elektroden 6a, zweite Elektroden 6b) und den diesen jeweils zugeordneten Kontaktstäben (erster Kontaktstab 8a, zweiter Kontaktstab 8b) erfolgt dabei wie in den Figuren 4 und 5 gezeigt:

An den Kontaktstäben 8a, 8b sind jeweils elektrisch leitfähige Klemmscheiben 10a, 10b angeordnet, die kraftschlüssig mit dem jeweiligen Kontaktstab 8a, 8b verbunden sind und eine radiale Klemmwirkung auf den jeweiligen Kontaktstab 8a, 8b ausüben. Damit wird ein sicherer elektrischer Kontakt zwischen dem Kontaktstab 8a, 8b und der Klemmscheibe 10a, 10b erzeugt. Dabei sind am ersten Kontaktstab 8a erste Klemmscheiben 10a angeordnet und kraftschlüssig mit dem ersten Kontaktstab 8a verbunden. Entsprechend sind am zweiten Kontaktstab 8b zweite Klemmscheiben 10b angeordnet und kraftschlüssig mit dem zweiten Kontaktstab 8b verbunden. Zwischen an dem jeweiligen Kontaktstab 8a, 8b angeordneten Klemmscheiben 10a, 10b und den diesem Kontaktstab 8a, 8b zugeordneten Elektroden 6a, 6b sind jeweils elektrisch leitfähige Distanzelemente 9 angeordnet. Die Elektroden 6a, 6b weisen jeweils im Randbereich angeordnete Zungen auf 18a, 18b, welche Aussparungen, insbesondere in Form einer Bohrung, enthalten, durch die der jeweilige Kontaktstab 8a, 8b hindurchragt. Zwischen den Zungen 18a und 18b von benachbarten Elektroden 6a, 6b sind im Bereich des jeweiligen Kontaktstabs 8a, 8b die ebenfalls elektrisch leitenden Distanzelemente 9 angeordnet, welche zwei in axialer Richtung des Stapels aufeinanderfolgende Elektroden 6a, 6b in Abstand zueinander halten. Die Distanzelemente 9 sind vorzugsweise als ringförmige Scheiben ausgestaltet und weisen bevorzugt eine Grundfläche 19 auf, die größer ist als die Grundfläche 20 der Klemmscheiben 10a, 10b. Auf diese Weise verteilt sich der von einer Klemmscheibe 10a, 10b auf die daran anliegende Zunge 18a, 18b einer Elektrode 6a, 6b ausgeübte Druck auf eine größere Fläche und verhindert so eine Beschädigung oder ein Verrutschen der Elektroden, was die elektrische Kontaktierung beeinträchtigen würde.

Um einen sicheren elektrischen Kontakt zwischen den Kontaktstäben 8a, 8b und den jeweils zugeordneten Elektroden 6a, 6b zu ermöglichen, werden die Distanzelemente 9 und die Zungen 18a, 18b der Elektroden 6a, 6b zwischen benachbarten Klemmscheiben 10a, 10b in axialer Richtung des Kontaktstabs 8a, 8b zusammengepresst. Dabei überträgt sich der ausgeübte Druck auf die Elektroden 6a, 6b und auf die wasserdurchlässige Abstandsschicht 7 zwischen den Elektroden 6a, 6b. Dies dient der Vermeidung von freien Bereichen oder Bereichen mit einem niedrigeren Strömungswiderstand im Stapel 4 und fördert eine gleichmäßige Durchströmung, indem verhindert wird, dass das Wasser die aktiven Schichten 5 zu schnell durchströmt und dadurch nicht die volle Entsalzungsleistung ausgeschöpft werden kann.

In dem in Figur 1 gezeigten Ausführungsbeispiel werden mehrere aufeinanderfolgende erste Elektroden 6a und mehrere aufeinanderfolgende zweite Elektroden 6b und die jeweils dazwischenliegenden Distanzelemente 9 durch eine obere Klemmscheibe 10' und eine untere Klemmscheibe 10" zusammengepresst, wie auch in Figur 5 gezeigt. Dabei wird der elektrische Kontakt für mehrere Elektroden 6a, 6b über zwei der Klemmscheiben 10a, 10b (nämlich die Klemmscheibe 10' und 10") hergestellt. In dieser Ausführungsform werden insgesamt weniger Klemmscheiben 10a, 10b als Distanzelemente 9 benötigt. Dies ist vorteilhaft, weil die Klemmscheiben 10a, 10b deutlich teurer sind als die Ringscheiben der Distanzelemente 9.

Figur 2 zeigt die Außenansicht einer Ausführungsform der Vorrichtung mit einem den Stapel 4 der aktiven Schichten 5 umgebenden Gehäuse 1, das einen zylindrischen Aufbau mit einer zylindrischen Außenwand 21 und einem sich radial nach innen an die Außenwand 21 anschließenden zylindrischen Störkörper 22 aufweist und eine obere Platte 11a und eine untere Platte 11b umfasst. In der gezeigten Ausführungsform sind die obere Platte 11a und die untere Platte 11b über eine Zentralstange 17 und mehrere an Rändern der Platten angeordnete Verbindungselemente 12, die bspw. als Gewindestangen ausgebildet sein können, miteinander verbunden und insbesondere gegeneinander verpresst. An der oberen Platte 11a befinden sich elektrische Anschlüsse 13, über welche die Kontaktstäbe 8a, 8b mit der außerhalb des Gehäuses 1 angeordneten elektrischen Quelle elektrisch verbindbar sind. An der oberen Platte 11a des Gehäuses 1 sind ferner ein Wassereinlass 2 und ein Wasserauslass 3 angeordnet, durch die zu entionisierendes Wasser (Rohwasser) in das Gehäuse 1 einströmen, bzw. entionisiertes Wasser (Diluat) aus der Vorrichtung ausströmen kann. In der dargestellten Ausführungsform ist der Wasserauslass 3 nahe des Zentrums der oberen Platte 11a angeordnet und der Wassereinlass 2 im Verhältnis dazu näher am Plattenrand. Bei einer Strömungsrichtung durch die aktiven Stapel 4 in radialer Richtung von außen nach innen ermöglicht diese Anordnung besonders kurze Strömungswege. Bei einer Umkehrung der Strömungsrichtung von innen nach außen sind der Wassereinlass 2 und der Wasserauslass 3 im Verhältnis zum gezeigten Ausführungsbeispiel vorzugsweise vertauscht angeordnet.

In der gezeigten Ausführungsform sind die obere Platte 11a und die untere Platte 11b des Gehäuses 1 über die Zentralstange 17 und die Verbindungselemente 12 gegeneinander verpresst. Beim Verpressen der obere Platte 11a und der untere Platte 11b kann der Plattenabstand so eingestellt werden, dass ein bestimmter Druck auf das Innere des Gehäuses und insbesondere auf den darin angeordneten Stapel 4 aus aktiven Schichten 5 erzeugt wird. Das Verpressen dient der Erzeugung einer gleichmäßigen Druckverteilung im Stapel 4 und damit der Vermeidung von Bereichen mit einem niedrigeren Strömungswiderstand. Die resultierende optimierte Durchströmung gewährleistet, dass die volle Entsalzungsleistung ausgeschöpft werden kann.

Figur 3 zeigt einen Querschnitt der in Figur 2 dargestellten Ausführungsform entlang einer Radialebene. Die Schnittebene verläuft damit durch die Längsachse der Zentralstange 17 und ist hier so gelegt, dass sie auch durch den Wassereinlass 2 sowie den Wasserauslass 3 verläuft. Der Querschnitt zeigt den Stapel 4 mit den aktiven Schichten 5 im Inneren des Gehäuses 1 sowie die Strömungskanäle, die im Inneren des Gehäuses vom Wassereinlass 2 zum Wasserauslass 3 verlaufen und eine Durchströmung des Wassers durch die aktiven Schichten 5 des Stapels 4 ermöglichen.

Die Darstellung veranschaulicht die kurzen Strömungswege, welche bei der Ausgestaltung des Stapels und der Elektroden in Kombination mit der in Figur 3 gezeigten Anordnung des Wasserauslasses 3 nahe des Zentrums und des Wassereinlasses 2 näher am Plattenrand der oberen Platte 11a erzielt werden. In der dargestellten Ausführungsform sind der Wassereinlass 2 und der Wasserauslass 3 gegenüberliegend auf unterschiedlichen Seiten der Zentralstange 17 angeordnet. Anordnungen die eine andere gegenseitige Anordnung zwischen dem Wassereinlass 2 und dem Wasserauslass 3 aufweisen und/oder bei welchen der Wassereinlass 2 und der Wasserauslass 3 auf der gleichen Seite der Zentralstange 17 angeordnet sind, sind ebenfalls möglich.

Im dargestellten Ausführungsbeispiel sind die ersten und die zweiten Elektroden 6a und 6b scheibenförmig und im Wesentlichen kreisrund ausgestaltet und weisen jeweils eine zentrale Aussparung 15, speziell in Form einer zentralen Bohrung, auf. Die zentralen Aussparungen 15 sind bei übereinander gestapelten aktiven Schichten 5 im Stapel 4 fluchtend übereinander angeordnet und bilden dadurch einen zentralen Kanal 16. Die Zentralstange 17 verläuft durch die fluchtend übereinander angeordneten zentralen Aussparungen 15 und den dadurch gebildeten zentralen Kanal 16. Der zentrale Kanal 16 ist dabei mit dem Wasserauslass 3 strömungsleitend verbunden. Zwischen den äußeren Rändern der scheibenförmigen Elektroden 6a, 6b und der Innenseite der zylindrischen Gehäusewand ist ein Spalt 14 vorgesehen, welcher strömungsleitend mit dem Wassereinlass 2 verbunden ist.

Im Betrieb der dargestellten Ausführungsform der Vorrichtung strömt das zu entionisierende Wasser (Rohwasser) vom Wassereinlass 2 zunächst in den Spalt 14, füllt diesen und dringt dann gleichmäßig von außen in radialer Richtung in die wasserdurchlässigen Abstandsschichten 7 der aktiven Schichten 5 ein. Danach durchströmt das Wasser die wasserdurchlässigen Abstandsschichten 7 radial von außen nach innen und verlässt die Abstandsschichten 7 in Richtung des zentralen Kanals 16. Das nun entionisierte Wasser (Diluat) fließt dann über den zentralen Kanal 16 zum Wasserauslass 3 und verlässt über diesen das Gehäuse 1.

Der zentrale Kanal 16 und der Spalt 14 zwischen den äußeren Rändern der Elektroden und dem Gehäuse 1 kann durch wasserdurchlässiges Material gefüllt sein, vorzugsweise mit dem gleichen Material aus dem die Abstandsschichten 7 bestehen. Dies ist vorteilhaft um eine gleichmäßige Durchströmung und Druckverteilung zu gewährleisten.

Figur 4 zeigt einen Stapel 4 aus aktiven Schichten 5 in einer vergrößerten Ansicht, wobei der Stapel 4 auf der unteren Platte 11b des Gehäuses 1 montiert ist und der restliche Teil des Gehäuses 1 aus Gründen der Übersichtlichkeit nicht dargestellt ist. Die Ansicht zeigt einen Stapel 4 aus den scheibenförmigen, im Wesentlichen kreisrund ausgestalteten und koaxial übereinander angeordneten Elektroden 6a, 6b, die jeweils eine zentrale Aussparung 15 aufweisen, wobei die Aussparung 15 zur Ausbildung des zentralen Kanals 16 miteinander fluchten. Im gezeigten Ausführungsbeispiel der Figur 4 sind die in radialer Richtung vorstehenden Zungen 18a der dargestellten ersten Elektroden 6a zu sehen, wobei die Zungen 18a jeweils Aussparungen, bspw. in Form von Bohrungen, enthalten, durch die der zugeordnete Kontaktstab 8a hindurchragt. Die Zungen 18a der Elektroden 6a werden beim Aufbau des Stapels 4 über die Klemmscheiben 10a, 10b und die Distanzelemente 9 am Kontaktstab 8a fixiert und insbesondere elektrisch leitend kontaktiert. Die Anordnung der Distanzelemente 9 und der Klemmscheiben 10', 10" wird in Figur 5 detailliert dargestellt.

Die Klemmscheiben 10', 10" sind kraftschlüssig mit den jeweiligen Kontaktstäben 8a, 8b verbunden und üben dabei eine radiale Klemmwirkung auf diese aus, welche einem Verrutschen der dem jeweiligen Kontaktstab zugeordneten Elektroden 6a, 6b in axialer Richtung entgegenwirkt. Dadurch werden die Distanzelemente 9 und die Elektroden 6a, 6b in ihrer axialen Position fixiert.

Die Klemmscheiben 10a, 10b sind hierzu vorzugsweise federnd ausgebildet. Die federnd ausgebildeten Klemmscheiben 10a, 10b können bei der Montage der Vorrichtung, insb. bei der Ausbildung des Stapels 4, auf den Kontaktstab 8a, 8b aufgepresst werden und entfalten damit bereits bei der Montage, insbesondere beim Stapeln der Schichten 5 des Stapels 4, abschnittsweise eine gleichmäßige mechanische Vorspannung in axialer Richtung, die sich auf die Schichten 5 überträgt. Dies ermöglicht eine einfache und schnelle Montage und eine gleichmäßige Druckverteilung im Stapel 4.

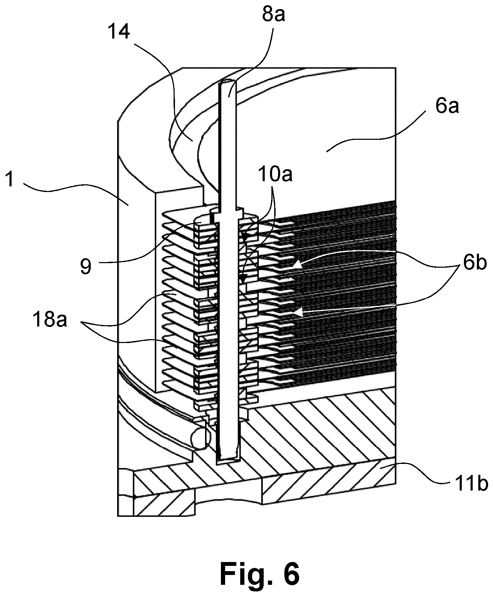

Die Darstellung in den Figuren 5 und 6 zeigt jeweils eine Detailansicht eines Ausschnittes aus Figur 4, das die Anordnung der Zungen 18a der ersten Elektroden 6a sowie der Distanzelemente 9 und der Klemmscheiben 10', 10" an einem Kontaktstab 8a veranschaulicht. Die Detailansicht zeigt die Anordnung exemplarisch an der ersten Elektrode 6a, ist aber analog auf die Anordnung an der Elektrode 6b übertragbar. Aus Figur 6 ist dabei auch die Anordnung der ersten Elektroden 6a und der zweiten Elektroden 6b in dem Stapel 4 ersichtlich. Dabei bilden jeweils eine erste Elektrode 6a und eine dazu benachbarte zweite Elektrode 6b zusammen mit einer dazwischen angeordneten Abstandsschicht 7 (die in Figur 6 nicht zu erkennen ist) eine aktive Schicht 5.

Zwischen den Zungen 18a von benachbarten Elektroden 6a sowie zwischen einer Zunge 18a und einer ersten Klemmscheibe 10a sind im Bereich des jeweiligen Kontaktstabs 8a die elektrisch leitenden Distanzelemente 9 angeordnet. Die Distanzelemente 9 und die ersten Klemmscheiben 10a weisen dabei jeweils Aussparungen auf, durch die der Kontaktstab 8a hindurchragt. In der gezeigten Ausführungsform werden die Zungen 18a zweier im Stapel 4 aufeinanderfolgender erster Elektroden 6a durch ein Distanzelement 9 beabstandet. Eine Beabstandung durch mehrere Distanzelemente 9 ist jedoch ebenfalls möglich.

Im gezeigten Ausführungsbeispiel befinden sich zwischen zwei ersten Klemmscheiben 10a mehrere aufeinanderfolgende erste Elektroden 6a und dazwischenliegende Distanzelemente 9, welche durch die ersten Klemmscheiben 10a zusammengepresst werden. Die ersten Klemmscheiben 10a üben dabei jeweils eine in axialer Richtung des Kontaktstabs 8a wirkende Pressung auf die Distanzelemente 9 und die Elektroden 6a aus.

Die Klemmscheiben 10a, 10b weisen zweckmäßig eine C-förmige **oder Ω**-förmige Grundstruktur mit einer Öffnung mit einem Innendurchmesser auf, wobei der Innendurchmesser der Öffnung bevorzugt kleiner ist als der Außendurchmesser der Kontaktstäbe 8a, 8b im Bereich des Stapels 4. Durch eine C-förmige **oder Ω**-förmige Grundstruktur der Klemmscheiben wird eine federnde Wirkung der Klemmscheiben 10a, 10b erzielt, die es ermöglicht, die Klemmscheiben 10a, 10b unter leichter Aufspreizung entweder in radialer Richtung oder auch in axialer Richtung über bzw. auf den Kontaktstab 8a, 8b zu schieben, wobei aufgrund der federnden Wirkung und des gegenüber dem Außendurchmesser der Kontaktstäbe 8a, 8b kleineren Innendurchmessers der Klemmscheiben 10a, 10b eine kraftschlüssige, selbsttätige Klemmung der Klemmscheiben 10a, 10b auf dem Kontaktstab 8a, 8b eintritt. Wenn die Grundstruktur der Klemmscheiben 10a, 10b Omega-förmig ist, kann eine Klemmscheibe 10a, 10b in einfacher Weise unter automatischer Aufspreizung der Schenkel des Omega aus radialer Richtung über den jeweiligen Kontaktstab 8a, 8b geschoben werden.

Sowohl die Distanzelemente 9 als auch die Klemmscheiben 10a, 10b sind elektrisch leitfähig, sodass sich durch die Anordnung der Klemmscheiben 10a, 10b und der Distanzelemente 9 ein zuverlässiger elektrischer Kontakt zwischen dem Kontaktstab 8a und den ersten Elektroden 6a ausbildet.

Die Distanzelemente 9 sind in der dargestellten Ausführungsform als ringförmige Scheiben ausgestaltet und weisen zweckmäßig eine zentrale Öffnung auf. Die Distanzelemente 9 weisen dabei zweckmäßig eine Grundfläche 19 auf, die größer ist als die Grundfläche 20 der Klemmscheiben 10a, 10b. In der beschriebenen Ausführungsform sind die Distanzelemente 9 nicht kraftschlüssig mit dem Kontaktstab 8a verbunden. Zweckmäßig hat die Öffnung der Distanzelemente 9 einen Innendurchmesser, der gleich groß oder bevorzugt etwas größer ist als der Außendurchmesser der Kontaktstäbe 8a, 8b ist. Selbst wenn die Distanzelemente 9 den Kontaktstab nicht oder nicht vollumfänglich berühren wird ein elektrischer Kontakt über die Grundflächen 20 der Klemmscheiben 10a, 10b und die Grundfläche 19 der Distanzelemente 9, über welche diese an einer benachbarten Klemmscheibe 10a, 10b anliegen, hergestellt. Durch die größere Grundfläche 19 der Distanzelemente 9 wird der von den Klemmscheiben 10a, 10b auf die Zungen 18a, 18b der Elektroden 6a, 6b ausgeübte Druck auf eine größere Fläche verteilt und verhindert so eine Beschädigung oder ein Verrutschen der Elektroden 6a, 6b, was eine Beeinträchtigung der elektrischen Kontaktierung zur Folge hätte.

### Bezugszeichenliste

- 1: Gehäuse
- 2: Wassereinlass
- 3: Wasserauslass
- 4: Stapel
- 5: aktive Schichten
- 6a: erste Elektrode
- 6b: zweite Elektrode
- 7: Abstandsschicht
- 8a: erster Kontaktstab
- 8b: zweiter Kontaktstab
- 9: Distanzelement
- 10a: erste Klemmscheibe
- 10b: zweite Klemmscheibe
- 10': obere Klemmscheibe
- 10": untere Klemmscheibe
- 11a: obere Platte
- 11b: untere Platte
- 12: Verbindungselemente
- 13: Anschlüsse
- 14: Spalt
- 15: zentrale Aussparung
- 16: zentraler Kanal
- 17: Zentralstange
- 18a: erste Zungen
- 18b: zweite Zungen
- 19: Grundfläche der Distanzelemente
- 20: Grundfläche der Klemmscheiben
- 21: Außenwand
- 22: Störkörper

## Patentansprüche

1. Vorrichtung zur Entfernung von Ionen aus Wasser basierend auf dem Prinzip der kapazitiven Entionisierung, wobei die Vorrichtung ein Gehäuse (1) umfasst, das einen Wassereinlass (2) aufweist, durch den zu entionisierendes Wasser in die Vorrichtung einströmen und einen Wasserauslass (3) aufweist, durch den entionisiertes Wasser aus der Vorrichtung ausströmen kann, wobei sich innerhalb des Gehäuses (1) ein Stapel (4) aus mehreren aktiven Schichten (5) befindet, wobei jede aktive Schicht (5) mindestens
• eine erste Elektrode (6a),
• eine zweite Elektrode (6b) und
• eine zwischen der ersten und der zweiten Elektrode angeordnete wasserdurchlässige Abstandsschicht (7),
umfasst, wobei die ersten Elektroden (6a) über einen ersten elektrisch leitenden Kontaktstab (8a) und die zweiten Elektroden (6b) über einen zweiten elektrisch leitenden Kontaktstab (8b) mit einer elektrischen Quelle verbindbar sind, wobei zwischen aufeinanderfolgenden ersten Elektroden (6a) im Bereich des ersten Kontaktstabs (8a) und zwischen aufeinanderfolgenden zweiten Elektroden (6b) im Bereich des zweiten Kontaktstabs (8b) elektrisch leitende Distanzelemente (9) angeordnet sind, welche zwei aufeinanderfolgende Elektroden (6a; 6b) in Abstand zueinander halten, **dadurch gekennzeichnet, dass** die im Bereich des ersten Kontaktstabs (8a) angeordneten Distanzelemente (9) über an dem ersten Kontaktstab (8a) angeordnete erste Klemmscheiben (10a) elektrisch mit dem ersten Kontaktstab (8a) kontaktiert sind, wobei die ersten Klemmscheiben (10a) kraftschlüssig mit dem Kontaktstab (8a) verbunden sind, und dass die im Bereich des zweiten Kontaktstabs (8b) angeordneten Distanzelemente (9) über an dem zweiten Kontaktstab (8b) angeordnete zweite Klemmscheiben (10b) elektrisch mit dem zweiten Kontaktstab (8b) kontaktiert sind, wobei die zweiten Klemmscheiben (10b) kraftschlüssig mit dem Kontaktstab (8b) verbunden sind und die Distanzelemente (9) jeweils nicht kraftschlüssig an dem ersten Kontaktstab (8a) oder dem zweiten Kontaktstab (8b) anliegen.

2. Vorrichtung nach Anspruch 1, **dadurch gekennzeichnet, dass** der elektrische Kontakt zwischen dem ersten Kontaktstab (8a) und den ersten Elektroden (6a) über die ersten Klemmscheiben (10a) erfolgt, wobei zwischen den ersten Klemmscheiben (10a) elektrisch leitfähige Distanzelemente (9) angeordnet sind, und dass der elektrische Kontakt zwischen dem zweiten Kontaktstab (8b) und den zweiten Elektroden (6b) über die zweiten Klemmscheiben (10b) erfolgt, wobei zwischen den zweiten Klemmscheiben (10b) elektrisch leitfähige Distanzelemente (9) angeordnet sind.

3. Vorrichtung nach Anspruch 1 oder 2, **dadurch gekennzeichnet, dass** zwischen in Axialrichtung des ersten Kontaktstabs (8a) aufeinanderfolgenden ersten Klemmscheiben (10a) ein oder mehrere Distanzelemente (9) angeordnet sind, und dass zwischen in Axialrichtung des zweiten Kontaktstabs (8b) aufeinanderfolgenden zweiten Klemmscheiben (10b) ein oder mehrere Distanzelemente (9) angeordnet sind.

4. Vorrichtung nach einem der voranstehenden Ansprüche, **dadurch gekennzeichnet, dass** das Gehäuse (1) eine obere Platte (11a) und eine untere Platte (11b) aufweist und das Gehäuse (1) insbesondere einen zylindrischen Aufbau aufweist, wobei bevorzugt die obere Platte (11a) und die untere Platte (11b) über mehrere an Rändern dieser Platten (11a, 11b) angeordnete Verbindungselemente (12) miteinander verbunden und insbesondere gegeneinander verpresst sind.

5. Vorrichtung nach Anspruch 4, **dadurch gekennzeichnet, dass** sich der Wassereinlass (2) und/oder der Wasserauslass (3) an der oberen Platte (11a) befinden, wobei der Wasserauslass (3) insbesondere nahe des Zentrums der oberen Platte (11a) angeordnet ist und der Wassereinlass (2) im Verhältnis dazu näher am Plattenrand angeordnet ist.

6. Vorrichtung nach einem der voranstehenden Ansprüche, **dadurch gekennzeichnet, dass** die Kontaktstäbe (8a, 8b) jeweils Anschlüsse (13) enthalten, über die die Kontaktstäbe (8a, 8b) mit einer elektrischen Quelle außerhalb des Gehäuses (1) elektrisch verbindbar sind, wobei sich die Anschlüsse (13) bevorzugt an oder auf der oberen Platte (11a) befinden.

7. Vorrichtung nach einem der voranstehenden Ansprüche, **dadurch gekennzeichnet, dass** zwischen äußeren Rändern der Elektroden (6a, 6b) und dem Gehäuse (1) ein Spalt (14) angeordnet ist, durch den zu entionisierendes Wasser vom Wassereinlass (2) in die wasserdurchlässige Abstandsschicht (7) strömen kann.

8. Vorrichtung nach einem der voranstehenden Ansprüche, **dadurch gekennzeichnet, dass** die ersten und zweiten Elektroden (6a) und (6b) scheibenförmig und bevorzugt im Wesentlichen kreisrund ausgestaltet sind und jeweils eine zentrale Aussparung (15) aufweisen, wobei die zentralen Aussparungen (15) bei gestapelten aktiven Schichten (5) im Stapel (4) fluchtend übereinander angeordnet sind und dadurch einen zentralen Kanal (16) bilden, wobei das Wasser im Betrieb der Vorrichtung die wasserdurchlässigen Abstandsschichten (7) bevorzugt radial von außen nach innen durchströmt, wobei entionisiertes Wasser über den zentralen Kanal (16) zum Wasserauslass (3) strömen kann, und wobei im zentralen Kanal (16) bevorzugt eine Zentralstange (17) angeordnet ist, die eine obere Platte (11a) und eine untere Platte (11b) des Gehäuses (1) miteinander verbindet und insbesondere gegeneinander verpresst.

9. Vorrichtung nach einem der voranstehenden Ansprüche, **dadurch gekennzeichnet, dass** die ersten Elektroden (6a) erste Zungen (18a) mit Aussparungen aufweisen, durch die der erste Kontaktstab (8a) hindurchragt, und dass die zweiten Elektroden (6b) zweite Zungen (18b) mit Aussparungen aufweisen, durch die der zweite Kontaktstab (8b) hindurchragt.

10. Vorrichtung nach einem der voranstehenden Ansprüche, **dadurch gekennzeichnet, dass** mehrere aufeinanderfolgende erste Elektroden (6a) und/oder mehrere aufeinanderfolgende zweite Elektroden (6b) und die jeweils dazwischenliegenden Distanzelemente (9) durch eine obere Klemmscheibe (10') und eine untere Klemmscheibe (10") zusammengepresst werden.

11. Vorrichtung nach einem der voranstehenden Ansprüche, **dadurch gekennzeichnet, dass** der erste und der zweite Kontaktstab (6a) und (6b) und/oder die Distanzelemente (9) und/oder die Klemmscheiben (10a, 10b) aus einem elektrisch leitenden Material sind und bevorzugt aus Titan bestehen oder Titan enthalten, wobei die Klemmscheiben (10a, 10b) bevorzugt aus einem elektrisch leitenden Material gefertigt sind, das zumindest im Wesentlichen inkompressibel ist und insbesondere ein Kompressionsmodul von größer als 50 GPa und insbesondere größer als 80 GPa aufweist.

12. Vorrichtung nach einem der voranstehenden Ansprüche, **dadurch gekennzeichnet, dass** die Klemmscheiben (10a, 10b) federnd ausgebildet sind und insbesondere eine C- oder Omega-förmige Grundstruktur und/oder eine Öffnung mit einem Innendurchmesser aufweisen, wobei der Innendurchmesser der Öffnung bevorzugt kleiner ist als der Außendurchmesser des ersten Kontaktstabs (8a) und des zweiten Kontaktstabs (8b) im Bereich des Stapels (4).

13. Vorrichtung nach einem der voranstehenden Ansprüche, **dadurch gekennzeichnet, dass** die Klemmscheiben (10a, 10b) jeweils eine Grundfläche (20) aufweisen, über die die Klemmscheiben (10a, 10b) jeweils mit einem benachbarten Distanzelement (9) elektrisch leitend in Kontakt stehen und dass die Distanzelemente (9) bevorzugt eine Grundfläche (19) aufweisen, die größer ist als die Grundfläche (20) der Klemmscheiben (10a, 10b) ist.

14. Vorrichtung nach einem der voranstehenden Ansprüche, **dadurch gekennzeichnet, dass** die Klemmscheiben (10a, 10b) jeweils eine in axialer Richtung des Kontaktstabs (8a, 8b) wirkende Pressung auf die Distanzelemente (9) und die Elektroden (6a, 6b) ausüben.

15. Vorrichtung nach einem der voranstehenden Ansprüche, **dadurch gekennzeichnet, dass** jede aktive Schicht (5) zwischen jeweils einer Elektrode (6a, 6b) und einer Abstandsschicht (7) eine wasserundurchlässige ionenselektive Membran als Ladungsbarriere umfasst, wobei die ionenselektive Membran entweder nur Anionen oder nur Kationen passieren lässt.
